# EUROPÄISCHE PATENTSCHRIFT

(11) **EP 1 590 143 B1**
(45) Veröffentlichungstag und Bekanntmachung des Hinweises auf die Patenterteilung: **14.05.2008**
(21) Anmeldenummer: 04702326.2
(22) Anmeldetag: 15.01.2004
(51) Int. Cl.: B29B 9/06, H02K 7/12, B01J 2/00

(54) **GRANULATOR ZUR ERZEUGUNG VON GRANULAT AUS SCHMELZFLÜSSIGEM KUNSTSTOFF**
GRANULATOR FOR PRODUCING A GRANULATE MADE OF MOLTEN PLASTIC
GRANULATEUR POUR FABRIQUER DU GRANULAT DE PLASTIQUE EN FUSION

(30) Priorität: 23.01.2003 DE 10302645
(43) Veröffentlichungstag der Anmeldung: 02.11.2005
(73) Patentinhaber: Rieter Automatik GmbH, 63762 Grossostheim (DE)
(72) Erfinder: MÜRB, Reinhardt-Karsten, 63743 Aschaffenburg (DE)
(74) Vertreter: Bardehle, Heinz
(86) Internationale Anmeldenummer: PCT/EP2004/000245
(87) Internationale Veröffentlichungsnummer: WO 2004/065090

(56) Entgegenhaltungen:
- EP-A- 0 221 228
- DE-C- 607 673
- US-A- 2 524 751
- US-A- 3 685 751
- US-A- 4 728 276
- US-A- 5 435 713
- US-A1- 2002 150 641

## Beschreibung

Die Erfindung bezieht sich auf einen Granulator zur Erzeugung von Granulat aus schmelzflüssigem Kunststoff mit einem über einen Nachstellbereich verschiebbaren Messerkopf, der mit einer die Kunststoffschmelze abgebenden Düsenplatte zusammenwirkt und der mit einer Antriebswelle eines einen Stator und einen Antriebsrotor enthaltenden Antriebsmotors verbunden und axial in Bezug auf die Düsenplatte verschiebbar gelagert ist.

Bei derartigen Granulatoren wird gemäß dem Stand der Technik für eine axiale Verschiebung des Messerkopfs das z.B. in der DE 44 08 235 C1 veröffentlichte Prinzip angewendet, von einem stationär angebrachten Antriebsmotor über eine Kupplung eine mit einer Antriebsmotorwelle koaxiale Messerwelle axial zu verschieben, an deren dem Antriebsmotor abgewandten Ende ein Messerkopf befestigt ist, der mit einer Düsenplatte zusammen wirkt. Die Axialverschiebung der Messerwelle erfolgt einerseits zum Ausgleich eines an den Messern des rotierenden Messerkopfes auftretenden Verschleißes, andererseits gegebenenfalls auch zu einer besonderen Einstellung eines Schneidspalts zwischen den Messern des Messerkopfs und der Düsenplatte. Für die Verschiebung der Messerwelle ist dabei ein erheblicher technischer Aufwand erforderlich, der in dem Bereich zwischen Antriebsmotor und Düsenplatte durch einen entsprechenden Abstand dieser beiden Bauteile zu berücksichtigen ist. Diese Gestaltung hat abgesehen von dem Raumbedarf auch zur Folge, dass die Lagerung der Messerwelle in der Nähe des Messerkopfs erschwert ist. Eine solche Lagerung bzw. Steifigkeit der Messerwelle ist aber erforderlich, um ein radiales Vibrieren der Messerwelle bei deren Drehung zu verhindern, wobei unvermeidliche Unwuchten zusätzlich störend in Erscheinung treten können. Hinzu kommt die Notwendigkeit der Einschaltung einer Kupplung zwischen dem Antriebsmotor und der Messerwelle, durch die die Axialverschiebung der Messerwelle gegenüber der axial festgehaltenen Welle des Antriebsmotors ausgeglichen werden muss. Eine derartige Axialkupplung verursacht naturgemäß eine gewisse Flexibilität des auf die Messerwelle wirkenden Antriebs, was zu Torsionsschwingungen des Messerkopfs führen kann, die sich in einem Rattern des Messerkopfs gegen die Düsenplatte bemerkbar machen und zu erhöhtem Verschleiß führen.

Die vorstehend beschriebene Technik der Verschiebung der Messerwelle gegenüber dem Antriebsmotor wird weiterhin in folgenden Druckschriften behandelt:

| | |
|---|---|
| deutsches Gebrauchsmuster | G 87 01 490.4, |
| | DE 42 39 972 C2, |
| deutsches Gebrauchsmuster | DE 201 17 461 U1, |
| | US-PS 3,317,957, |
| | US-PS 4,728,276. |

Im Zusammenhang mit Granulatoren, bei denen die Messer des Messerkopfs über die Düsenplatte schleifen, hat man bereits das Prinzip eines axial durch eine Feder vorgespannten Messerkopfs verwendet (siehe US-PS 6,332,765), wobei die Spannung der Feder und damit die auf die Düsenplatte wirkende Andruckkraft durch einen in einer Hohlwelle des Antriebsrotors gelagerten, pneumatisch betätigten Stößels wahlweise eingestellt werden kann. Auch diese Anordnung führt zu einem erheblichen baulichen Aufwand zwischen Antriebsmotor und Düsenplatte, abgesehen davon, dass, wie gesagt, das in der Druckschrift behandelte Prinzip nur im Zusammenhang mit an die Düsenplatte angedrücktem Messerkopf Verwendung findet.

Ein Stand der Technik, der demjenigen der vorstehend behandelten Druckschrift entspricht, ist in der DE 201 17 461 U1 beschrieben, die einen Granulator mit an die Düsenplatte angedrücktem Messerkopf offenbart. Hier wird als eine Art Feder ein Faltenbalg verwendet, der das Ende der Welle des Antriebsrotors umgibt und durch Aufpumpen eine axiale Ausdehnung und damit zu einer entsprechend höheren Andruckkraft des Messerkopfs an der Düsenplatte führt.

Der Erfindung liegt die Aufgabe zugrunde, sowohl den baulichen Aufwand bei den oben beschriebenen Granulatoren zu verringern als auch eine Gestaltung zu schaffen, bei der bei enger baulicher Ausführung die Gefahr von Vibrationen, Torsionsschwingungen und dergleichen weitgehend vermieden ist, dabei aber eine wahlweise genaue Einstellung des Messerkopfs in Bezug auf die Düsenplatte ermöglicht wird. Erfindungsgemäß geschieht dies dadurch,
dass der Antriebsrotor gegenüber dem in Bezug auf die Düsenplatte festgehaltenen Stator über den Nachstellbereich mittels eines Linear-Verstellorgans, das zwischen Antriebsrotor und einem mit der Düsenplatte starr verbundenen Traggestell angebracht ist, axial verschiebbar und in diesem Bereich fixierbar gelagert ist.

Aufgrund dieser Gestaltung wird der Verschiebemechanismus für den Messerkopf in den Antriebsmotor direkt einbezogen, d.h. dem Antriebsmotor eine nur geringen Aufwand erfordernde Gestaltung gegeben, gemäß der von den beiden wesentlichen Bestandteilen des Antriebsmotors der Antriebsrotor in beiden Richtungen unter Kraftaufwand verschiebbar und fixierbar gelagert wird, womit der gesamte Aufwand vermieden wird, der beim Stand der Technik gewissermaßen für die Verlängerung der Welle des Antriebsrotors im Sinne der Verschiebung der Welle gegenüber dem Antriebsrotor erforderlich ist, da die Verschiebbarkeit und Fixierbarkeit des zu verstellenden Bauteils gewissermaßen in dieses hineinverlagert wird. Es ergibt sich so eine erhebliche Verringerung des konstruktiven Aufwandes und eine Gedrängtheit der baulichen Gestaltung, die zu dem Effekt einer hohen Stabilität der Führung des Messerkopfs führt, dem dabei praktisch kein Freiheitsgrad für irgendwelche Torsionsschwingungen und dergleichen gegeben ist.

Es ist an sich aus der deutschen Offenlegungsschrift DE 37 28 868 A1 bekannt, den Rotor eines Elektromotors zusätzlich zum Erregungssystem für die Drehbewegung des Rotors mit einem weiteren Erregungssystem für eine axiale Relativverschiebung zu versehen und beide Erregungssysteme unabhängig voneinander anzusteuern. Als ein besonderes Ausführungsbeispiel für die Anwendung dieser Technik wird in der Veröffentlichung der Farbbandantrieb in Schreib- oder ähnlichen Maschinen angegeben, bei denen das Farbband schrittweise in seiner Längsrichtung transportiert wird, aber auch quer zur Transportrichtung in mindestens zwei Höhenlagen verschiebbar sein muss. Der Gedanke der Verschiebbarkeit des Rotors hat jedoch in die Granulatorentechnik nicht Eingang gefunden, die von der in den eingangs erwähnten Veröffentlichungen erläuterten Technik beherrscht wird, bei der die den Messerkopf tragende Messerwelle gegenüber dem axial unverschiebbar gelagerten Antriebsrotor des Antriebsmotors angeordnet ist. Die Erfindung bricht mit dieser ständigen Praxis der Gestaltung von Granulatoren, indem sie ein Linear-Verstellorgan auf der der Düsenplatte abgewandten Seite des Antriebsmotors so anordnet, dass sich dieses Linear-Verstellorgan einerseits gegen die Antriebswelle des Antriebsrotors und andererseits gegen ein mit der Düsenplatte in fester Verbindung stehendes stationäres Lager abstützt und hierdurch erhebliche Kräfte in das System einbringen kann.

Für die Verschiebbarkeit des Antriebsrotors gestaltet man den Granulator zweckmäßig so, dass der Antriebsrotor im Stator beidseitig in Wälzlagern gelagert ist, deren Außenringe axial verschiebbar in einem Gehäuse des Antriebsmotors aufgenommen sind. Bei dieser Gestaltung werden die Außenringe der Wälzlager gleichzeitig als Axialgleitlager benutzt, ohne dass es hierzu eines besonderen baulichen Aufwandes bedarf, abgesehen von der Zurverfiigungstellung eines ausreichend langen Sitzes der Außenringe im Gehäuse des Stator 9.

Für die axiale Verschiebung des Antriebsrotors verwendet man zweckmäßig einen Linear-Antrieb in der Weise, dass der Antriebsrotor sich auf den Linear-Antrieb über eine Drehentkopplungsvorrichtung abstützt. Als Linear-Antrieb kommt ein hydraulischer, pneumatischer oder elektrischer Antrieb, insbesondere mit Schrittschaltsteuerung, in Frage. Die dabei verwendete Drehentkopplungsvorrichtung sorgt dafür, dass sich der Antriebsrotor trotz seiner Drehung axial abstützen kann, ohne dabei das Element, an dem man sich abstützt, mit in Drehung zu versetzen. Die Drehentkopplung erfolgt bereits durch die Wälzlager, die einerseits der Welle des Antriebsrotors die notwendige Drehung als auch die axiale Abstützung gibt.

In den Figuren sind Ausführungsbeispiele der Erfindung dargestellt. Es zeigen:
- Figur 1: den Granulator mit dem Antriebsmotor, dessen Antriebsrotor verschiebbar angeordnet ist,
- Figur 2: eine Abwandlung der Anordnung gemäß Figur 1,

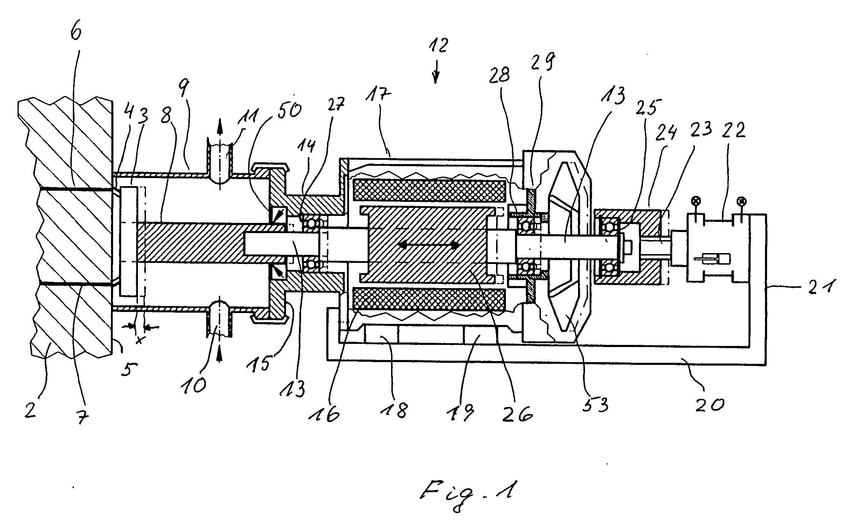

In der Figur 1 ist der Granulator 1 mit der Düsenplatte 2 und dem rotierenden Messerkopf 3 gezeigt, dessen Messer 4 die Austrittsseite 5 der Düsenplatte 2 überstreichen und dabei aus den Düsen 6 und 7 austretende Kunststoffschmelze zu Granulat zerschneiden. Die Düsenplatte 2 enthält eine größere Anzahl von ringartig angeordneten Düsen 6 und 7, die in der Figur 1 nicht sichtbar sind. Bei dieser Gestaltung handelt es sich um eine bekannte Anordnung.

Der Messerkopf 3 wird über die Rotorachse 8 in Drehung versetzt, die zusammen mit dem Messerkopf 3 und den Messern 4 in dem Gehäuse 9 untergebracht sind, das von einem Kühlmedium durchströmt wird, die in den Einlass 10 einströmt und über den Auslass 11 abströmt. Die Kühlflüssigkeit nimmt dabei das von den Messern 4 geschnittene Granulat mit und transportiert das Granulat aus dem Gehäuse 9 heraus. Das Gehäuse 9 ist mit der Düsenplatte 2 fest verbunden.

Die Rotorachse 8 ist mit der Antriebswelle 13 des Antriebsmotors 12 verbunden, z.B. durch Verschrauben oder Verstiften. Der innere Raum des Gehäuses 9 ist gegenüber dem Außenraum durch die Wellendichtung 50 abgedichtet, die einerseits gegen die Rotorachse 8 andrückt und andererseits in dem Rohrstück 14 gelagert ist, das über seinen Flansch 15 einen Bestandteil des Gehäuses 9 bildet. Die Antriebswelle 13 setzt sich in den Antriebsrotor 26 hinein fort und trägt diesen, bei dem es sich um einen bekannten Kurzschlussläufer einer elektrischen Asynchronmaschine handeln kann. Der Antriebsrotor 26 dreht sich in dem Stator 16, dem in bekannter Weise (hier nicht im Einzelnen dargestellt) die erforderliche elektrische Energie zugeführt wird, um den Antriebsrotor 26 in Drehung zu versetzen. Der Stator 16 ist in bekannter und üblicher Weise in dem Motorgehäuse 17 gelagert. Das Motorgehäuse 17 ruht über die beiden Stützen 18 und 19 auf dem Traggestell 20, das zusammen mit der Düsenplatte 2 stationär gelagert ist, womit der Abstand zwischen der Düsenplatte 2 und Traggestell 20 dauernd festgehalten ist.

An dem Schenkel 21 des Traggestells 20 ist das Linear-Verstellorgan 22 befestigt, das durch eine bekannte linear wirkende Verschiebeeinrichtung gebildet ist, z.B., wie symbolisch in dem Linear-Verstellorgan 22 angedeutet, durch eine Kolbenzylinder-Einheit. Das Linear-Verstellorgan 22 wirkt über seinen axial verschiebbaren Stößel 23 auf die zwischen ihm und der Rotorachse 8 angeordneten Bauteile (siehe weiter unten), womit die Verschiebung des Stößels 23 sich auf die Rotorachse 8 und damit auf den Messerkopf 3 auswirkt. Auf diese Weise ergibt sich eine gewünschte Einstellung zusammen mit den Messern 4, insbesondere zum Ausgleich eines Verschleißes, wobei die Messer 4 sowohl in Anlage aus der Düsenplatte 2 als auch in einem bestimmten Abstand zur Düsenplatte 2 gebracht werden. Zwischen dem Linear-Verstellorgan 22 und der Düsenplatte 2 besteht somit eine starre Verbindung über das Traggestell 20, das Rohrstück 14 und das Gehäuse 9.

Der Stößel 23 ist mit dem glockenartig ausgebildeten Übertragungsglied 24 fest verbunden, das in seinem Hohlraum das fest in diesem verankerte Wälzlager 25 trägt. Der Innenring des Wälzlagers 25 sitzt fest auf dem Ende der Antriebswelle 13, womit eine feste Verbindung zwischen dem Stößel 23 und der Antriebswelle 13 gegeben ist. Die Axialverschiebung des Stößels 23 wird also direkt und unverändert auf die Antriebswelle 13 übertragen, wobei das Übertragungsglied 24 mit dem Wälzlager 25 als Drehentkopplungsvorrichtung wirkt. Im Falle einer Verschiebung des Stößels 23 ergibt sich somit eine entsprechende Verschiebung der Antriebswelle 13, des Antriebsrotors 26 (gegenüber dem Stator 16) und der Rotorachse 8 unter Mitnahme des Messerkopfs 3 mit den Messern 4, womit die von dem Linear-Verstellorgan 22 definiert gegebene Verschiebung des Stößels 23 in genau der gleichen Länge auf dem Messerkopf 3 und die Messer 4 übertragen ist.

Die vorstehend beschriebene axiale Verschiebung der Antriebswelle 13 wird dadurch ermöglicht, dass diese auf den beiden Wälzlagern 27 und 28 gelagert ist, die jeweils mit ihren Außenringen axial gleitend einerseits in dem Rohrstück 14 und andererseits in dem Gehäuseflansch 29 des Motorgehäuses 17 gelagert ist. Die beiden fest auf der Antriebswelle 13 sitzenden Wälzlager 27 und 28 können sich also bei der axialen Verschiebung der Antriebswelle 13 aufgrund ihres Schiebesitzes gegenüber dem Rohrstück 14 bzw. dem Gehäuseflansch 29 entsprechend verschieben, was durch die strichpunktierten Begrenzungslinien jeweils rechts neben den Wälzlagern 27 und 28 angedeutet ist (Nachstellbereich x). Diese Verschiebung ist durch entsprechende strichpunktierte Linien neben dem Messerkopf 3 und dem Verbindungsstück 24 ebenfalls dargestellt. Anstelle der Gleitlagerung der vorstehend erwähnten Außenringe können auch Rollenlagerelemente verwendet werden. Mit 53 ist ein Ventilator bezeichnet.

Durch die Anbringung des Linear-Verstellorgans 22 neben dem rechten Ende der Antriebswelle 13 lässt sich eine enge bauliche Zusammenfassung von Messerkopf 3, Gehäuse 9 und Antriebsmotor 12 herbeiführen, was gegenüber der bisher üblichen Anordnung eines Linear-Verstellorgans zwischen Antriebsmotor und Messerkopf von erheblichem Vorteil ist, insbesondere darum, weil, wie die Darstellung in Figur 1 deutlich zeigt, die axial gradlinige Verbindung von Antriebsmotor 12 und Messerkopf 3 eine sehr stabile Gestaltung dieser Bauteile und ihrer Verbindung ermöglicht, die bei bekannten derartigen Ausführungsformen durch ein in diesem Bereich angeordnetes Linear-Verstellorgan erheblich beeinträchtigt wäre.

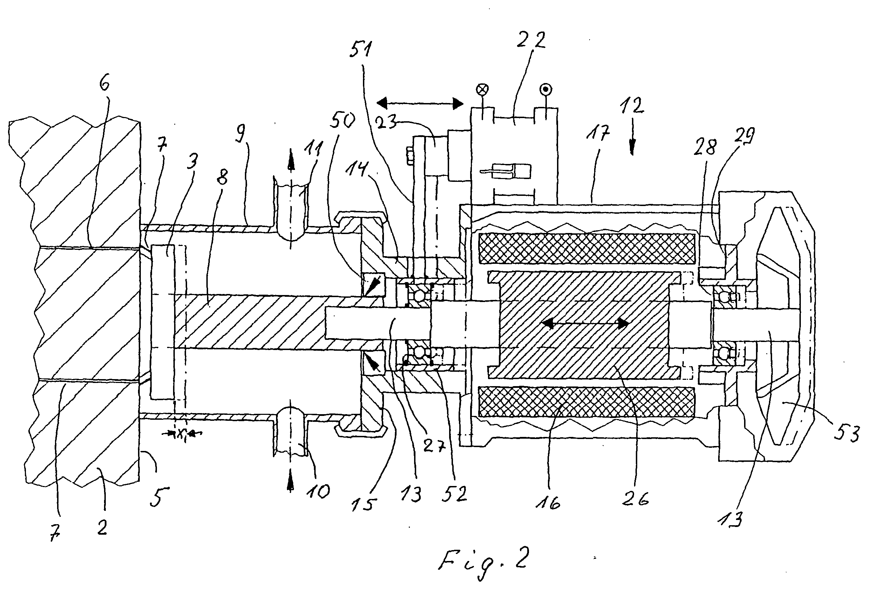

In der Figur 2 ist eine Abwandlung der Gestaltung gemäß Figur 1 dargestellt, bei der es sich, wie beim Gegenstand der Figur 1, um einen Granulator mit verschiebbarem Antriebsrotor handelt. Anders als beim Gegenstand der Figur 1 wird bei der Anordnung gemäß Figur 2 die von dem Linear-Verstellorgan 22 erzeugte Verschiebekraft auf der der Düsenplatte 2 zugewandten Seite der Antriebswelle 13 des Antriebsmotors 12 eingeleitet, und zwar auf folgende Weise: Das Linear-Verstellorgan 22 ist fest auf dem Motorgehäuse 17 gelagert, das damit das Traggestell bildet, das beim Gegenstand der Figur 1 durch das Bauteil 20 gebildet ist. Über das Motorgehäuse 17, das Rohrstück 14, den Flansch 15 und das mit der Düsenplatte 2 fest verbundene Gehäuse 9 liegt damit eine starre Verbindung zwischen dem Linear-Verstellorgan 22 und der Düsenplatte 2 vor.

## Patentansprüche

1. Granulator (1) zur Erzeugung von Granulat aus schmelzflüssigem Kunststoff mit einem über einen Nachstellbereich (x) verschiebbaren Messerkopf (3), der mit einer die Kunststoffschmelze abgebenden Düsenplatte (7) zusammenwirkt und der mit einer Antriebswelle (13) eines einen Stator (16) und einen Antriebsrotor (26) enthaltenden Antriebsmotors (12) verbunden und axial in Bezug auf die Düsenplatte (7) verschiebbar gelagert ist, **dadurch gekennzeichnet, dass** der Antriebsrotor (26) gegenüber dem in Bezug auf die Düsenplatte (7) festgehaltenen Stator (16) über den Nachstellbereich (x) mittels eines Linear-Verstellorgans (22), das zwischen Antriebsrotor (26) und einem mit der Düsenplatte (7) starr verbundenen Traggestell (20) angebracht ist, axial verschiebbar und in diesem Bereich fixierbar gelagert ist.

2. Granulator nach Anspruch 1, **dadurch gekennzeichnet, dass** der Antriebsrotor (26) im Stator (16) beidseitig in Wälzlagern (27, 28) gelagert ist, deren Außenringe axial verschiebbar in einem Gehäuse (14, 29) des Antriebsmotors (12) aufgenommen sind.

3. Granulator nach Anspruch 2, **dadurch gekennzeichnet, dass** der Antriebsrotor (26) sich auf ein Linear-Verstellorgan (22) über eine Drehentkopplungsvorrichtung (24, 25) abstützt.

4. Granulator nach Anspruch 3, **dadurch gekennzeichnet, dass** das Linear-Verstellorgan (22) auf der dem Messerkopf (3) abgewandten Seite des Antriebsrotors (26) angeordnet ist.

## Claims

1. Granulator (1) for producing granulate from molten plastic with a cutter head (3) displaceable over an adjustment range (x), said cutter head (3) cooperating with a die plate (7) dispensing the plastic melt, said cutter head (3) being connected to a drive shaft (13) of a drive motor (12) containing a stator (16) and a drive rotor (26) and being axially displaceable with respect to the die plate (7), **characterized in that** the drive rotor (26) is axially displaceable in relation to the stator (16) over the adjustment range (x) by means of a linear adjustment element (22), said stator (16) being fixed with respect to the die plate (7), said linear adjustment element (22) being fitted between drive rotor (26) and a carrying frame (20) rigidly connected to the die plate (7), said drive rotor (26) being fixable in said range.

2. Granulator according to claim 1, **characterized in that** the drive rotor (26) is held in rolling bearings (27, 28) at either end in the stator (16), the outer rings of said rolling bearings (27, 28) being axially displaceable in a housing (14, 29) of the drive motor (12).

3. Granulator according to claim 2, **characterized in that** the drive rotor (26) is supported on a linear adjustment element (22) through the intermediary of a rotary decoupling device (24, 25).

4. Granulator according to claim 3, **characterized in that** the linear adjustment element (22) is disposed on the side of the drive rotor (26) facing away from the cutter head (3).

## Revendications

1. Granulateur (1) pour fabriquer du granulat à partir de matière plastique en fusion, comprenant une tête à couteaux (3), laquelle est déplaçable sur une zone d'ajustage (x), coopère avec une plaque de filières (7) fournissant la matière plastique en fusion, est reliée à un arbre d'entraînement (13) d'un moteur d'entraînement (12) contenant un stator (16) et un rotor d'entraînement (26) et est montée à coulissement axial par rapport à la plaque de filières (7), **caractérisé en ce que**, au regard du stator (16) immobilisé par rapport à la plaque de filières (7), le rotor d'entraînement (26) est monté à coulissement axial sur la zone d'ajustage (x) et de manière blocable dans cette zone au moyen d'un organe de déplacement linéaire (22) disposé entre le rotor d'entraînement (26) et un bâti porteur (20) relié de manière rigide à la plaque de filières (7).

2. Granulateur selon la revendication 1, **caractérisé en ce que**, dans le stator (16), le rotor d'entraînement (26) est monté des deux côtés dans des paliers à roulement (27, 28) dont les bagues extérieures sont logées à coulissement axial dans un carter (14, 29) du moteur d'entraînement (12).

3. Granulateur selon la revendication 2, **caractérisé en ce que** le rotor d'entraînement (26) prend appui sur un organe de déplacement linéaire (22) par l'intermédiaire d'un dispositif de découplage en rotation (24, 25).

4. Granulateur selon la revendication 3, **caractérisé en ce que** l'organe de déplacement linéaire (22) est disposé sur le côté du rotor d'entraînement (26) situé à l'opposé de la tête à couteaux (3).
